# EUROPEAN PATENT APPLICATION

(11) **EP 3 709 169 A1**
(43) Date of publication of application: **16.09.2020**
(21) Application number: 18876361.9
(22) Date of filing: 07.05.2018
(51) Int. Cl.: G06F 11/20

(54) **METHOD AND DEVICE FOR SWITCHING BETWEEN MASTER AND STANDBY OPERATION DISPLAY MACHINES, AND COMPUTER STORAGE MEDIUM**

(30) Priority: 10.11.2017 CN 201711107346
(71) Applicant: CRSC Research & Design Institute Group Co., Ltd., Beijing 100070 (CN)
(72) Inventor: ZHOU, Jie, Beijing 100070 (CN); CHEN, Qiang, Beijing 100070 (CN); QIU, Xihong, Beijing 100070 (CN); CUI, Jianuo, Beijing 100070 (CN); XIE, Yingfeng, Beijing 100070 (CN)
(74) Representative: Samson & Partner Patentanwälte mbB
(86) International application number: PCT/CN2018/085832
(87) International publication number: WO 2019/091062

(57) **Abstract**

The present disclosure provides an active-standby switching method for an operation indicator, wherein said method comprises: determining current enabling attributes of an active-standby operation indicator according to feature states of all external interfaces of the active-standby operation indicator; calculating expected enabling attributes of the active-standby operation indicator according to priorities and based on configuration rules; and switching the active-standby operation indicator according to the current enabling attributes and the expected enabling attributes. The present disclosure enables switching of the active-standby operation indicator to adapt to the complex application scenarios of multiple interfaces and multiple priorities. The present disclosure also provides an active-standby switching device for an operation indicator, and a computer storage medium.

## Description

### CROSS-REFERENCE TO RELATED APPLICATIONS

This application claims priority from Chinese Patent Application No. 201711107346.1 filed on November 10, 2017, the contents of which are hereby incorporated by reference in its entirety as part of this application.

### TECHNICAL FIELD

The present disclosure relates to the field of computer control technologies, especially to an active-standby dual-processor switching method for an operation indicator, and more particularly to an active-standby switching method and device for an operation indicator, and a computer storage medium.

### BACKGROUND

At present, China's high-speed passenger-dedicated railway signal control system has formed a relatively complete technical system and has been named the CTCS system (Chinese Train Control System). The CTCS system includes computer interlocking equipment, train control center equipment, track circuit equipment, onboard train automatic protection equipment, signal centralized monitoring equipment, scheduling centralized equipment, EMU (Electrical Multiple Unit / bullet train) supervision system, temporary speed limit server, and other signal equipment.

With the continuous development of railway signal communication control technologies, the number of external interfaces of computer interlocking devices and their operation indicator has been continuously increased, resulting in that more and more complex factors need to be considered in active-standby dual-processor switching logic for the operation indicator. The original dual-processer switch processing logic has been unable to adapt to the complex application scenarios of multiple interfaces and multiple priorities. For example, the existing dual-processor switch processing logic only considers several factors such as interlocking dual-system channel, CTC (Centralized Traffic Control) Autonomous Dual-processor channel, active-standby state, and priority, and cannot adapt to the situation of multiple interfaces and multiple priorities.

Therefore, on the basis of ensuring security and stability, it is urgent for those skilled in the art to develop an active-standby dual-processor switching method for an operation indicator with good scalability and applicability, so as to adapt to complex application scenarios with multiple interfaces and multiple priorities,

### SUMMARY

In view of the above, the present disclosure is addressed to provide an active-standby switching method and device for an operation indicator, and a computer storage medium, and solves the problem that the existing active-standby operation indicator cannot adapt to the complex application scenarios of multiple interfaces and multiple priorities.

In order to solve the above technical problem, a specific implementation of the present disclosure provides an active-standby switching method for an operation indicator, said method comprising: determining current enabling attributes of an active-standby operation indicator according to feature states of all external interfaces of the active-standby operation indicator; calculating expected enabling attributes of the active-standby operation indicator according to priorities and based on configuration rules; and switching the active-standby operation indicator according to the current enabling attributes and the expected enabling attributes.

A specific implementation of the present disclosure further provides a computer storage medium containing computer-executable instructions capable of, when being processed by a data processing device, causing the data processing device to perform the method comprising steps of: determining current enabling attributes of an active-standby operation indicator according to feature states of all external interfaces of the active-standby operation indicator; calculating expected enabling attributes of the active-standby operation indicator according to priorities and based on configuration rules; and switching the active-standby operation indicator according to the current enabling attributes and the expected enabling attributes.

A specific implementation of the present disclosure further provides an active-standby switching device for an operation indicator, said device comprising: a determining unit configured to determine current enabling attributes of an active-standby operation indicator according to feature states of all external interfaces of the active-standby operation indicator; a calculating unit configured to calculate expected enabling attributes of the active-standby operation indicator according to priorities and based on configuration rules; and a switching unit configured to switch the active-standby operation indicator according to the current enabling attributes and the expected enabling attributes.

As known from the above specific implementations of the present disclosure, the active-standby switching method and device for an operation indicator, and the computer storage medium at least have the following advantageous effects: feature states of all external interface systems of the operation indicator are obtained, current enabling attributes of the operation indicator and the external interface systems are determined according to the feature states of the external interface systems, expected enabling attributes of the operation indicator and the external interface systems are calculated according to priories and based on configuration rules, the current enabling attributes and the expected enabling attributes are compared to switch the active-standby operation indicator. The external interfaces are hierarchically processed according to priorities, mutual interference is avoided, and the external interfaces can be easily extended; a list of rules for priories of the external interfaces and influence factors of the external interfaces can be configured to facilitate modifying the switch processing logic; influence results caused by the external interfaces on switching of the active-standby operation indicator are divided into categories such as Must, Inherited from a higher level, Recommending and listening to a lower level, so that the influence factors of interfaces in respective levels have been properly considered and dealt with, thereby switching of the active-standby operation indicator can adapt to the complex multi-interface, multi-priority application scenarios.

It should be understood that the foregoing general description and the following detailed description are exemplary and illustrative only, and should not be construed as limiting the scope of the present disclosure.

### BRIEF DESCRIPTION OF THE DRAWINGS

The accompanying drawings attached are part of the specification of the present disclosure, and illustrate exemplary embodiments of the present disclosure. The accompanying drawings together with the description of the specification are used to explain principles of the present disclosure.
FIG. 1 is a flowchart of a first embodiment of an active-standby switching method for an operation indicator according to a specific implementation of the present disclosure;
FIG. 2 is a flowchart of a second embodiment of an active-standby switching method for an operation indicator according to a specific implementation of the present disclosure;
FIG. 3 is a schematic structural diagram of a first embodiment of an active-standby switching device for an operation indicator according to a specific implementation of the present disclosure; and
FIG. 4 is a schematic structural diagram of a second embodiment of an active-standby switching device for an operation indicator according to a specific implementation of the present disclosure.

### DETAILED DESCRIPTION OF THE EMBODIMENTS

To make the objectives, technical solutions, and advantages of the embodiments of the present disclosure more clear and comprehensible, the spirits of the present disclosure will be clearly described below with reference to the drawings and the detailed descriptions. Once learning the embodiments of the present disclosure, those skilled in the art can make changes and modifications based on techniques taught by the contents of the present disclosure, without departing from the spirits and scopes of the present disclosure.

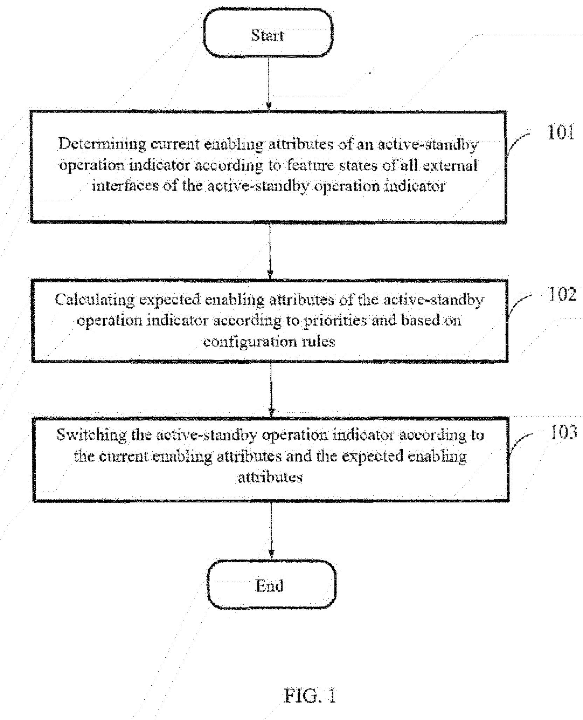

FIG. 1 is a flowchart of a first embodiment of an active-standby switching method for an operation indicator according to a specific implementation of the present disclosure, as shown in FIG. 1, current enabling attributes of an active-standby operation indicator are determined according to feature states of all external interfaces of the active-standby operation indicator, thereafter expected enabling attributes of the active-standby operation indicator are calculated accordingly; and finally, the active-standby operation indicator is switched according to the current enabling attributes and the expected enabling attributes,

In the specific implementation shown in this figure, the active-standby switching method for an operation indicator comprises steps provided as below,

Step 101: determining current enabling attributes of an active-standby operation indicator according to feature states of all external interfaces of the active-standby operation indicator. In a specific embodiment of the present disclosure, the active-standby operation indicator includes an active operation indicator and a standby operation indicator. External interfaces of the operation indicator will affect switching between the active operation indicator and the standby operation indicator. The external interfaces of the operation indicator usually are connected to an interlocking interface, a train control interface, a CTC (centralized traffic control) interface, and a console interface etc. The current enabling attributes of the active-standby operation indicator refer to which one of the two operation indicators is the active operation indicator and which one of the two operation indicators is the standby operation indicator in a current time period. The current enabling attributes specifically include an active-standby state of the active-standby operation indicator.

Step 102: calculating expected enabling attributes of the active-standby operation indicator according to priorities and based on configuration rules. In a specific embodiment of the present disclosure, the expected enabling attributes of the active-standby operation indicator refer to which one of the two operation indicators is the active operation indicator and which one of the two operation indicators is the standby operation indicator in a next time period. The expected enabling attributes specifically include an active-standby state of the active-standby operation indicator. The configuration rules specifically include: an interlock system rule, a train control system rule, a CTC system rule, and a console system rule. An order of the priorities from high to low is: an interlock interface, a train control interface, a CTC interface, and a console interface.

Step 103: switching the active-standby operation indicator according to the current enabling attributes and the expected enabling attributes. In a specific embodiment of the present disclosure, it is determined which one of the two operation indicators is the active operation indicator and which one of the two operation indicators is the standby operation indicator in a next time period according to the current enabling attributes and the expected enabling attributes.

Referring to FIG. 1, the interfaces in respective levels of the operation indicator will affect which one of the two operation indicators is the active operation indicator and which one of the two operation indicators is the standby operation indicator in a next time period, the influence factors of the interfaces in respective levels have been properly considered and dealt with, so that switching of the active-standby operation indicator can adapt to the complex multi-interface, multi-priority application scenarios.

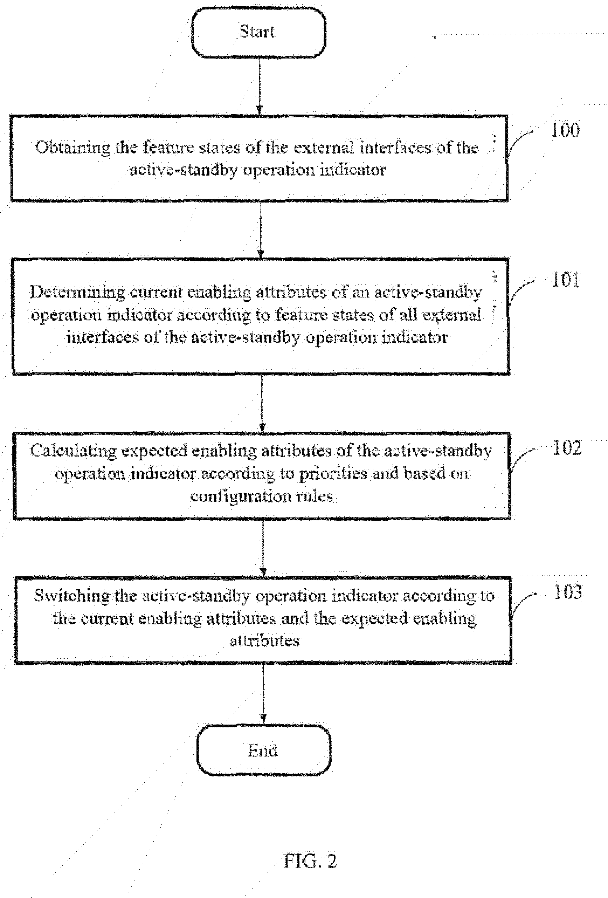

FIG. 2 is a flowchart of a second embodiment of an active-standby switching method for an operation indicator according to a specific implementation of the present disclosure, as shown in FIG. 2, the feature states of the external interfaces of the active-standby operation indicator need to be obtained first.

In the specific implementation shown in this figure, the active-standby switching method for an operation indicator further comprises:
Step 100: obtaining the feature states of the external interfaces of the active-standby operation indicator. In a specific embodiment of the present disclosure, the feature states include an interface channel connection state, an active-standby state, and an operation mode state or the like.

Referring to FIG. 2, the feature states of the external interfaces are taken into consideration when switching the active-standby operation indicator, so that switching of the active-standby operation indicator can adapt to the complex multi-interface, multi-priority application scenarios.

In the specific implementation shown in this figure, step 103 specifically comprises: when the current enabling attributes are one active and one standby and the expected enabling attributes both are active, maintaining a state of the active-standby operation indicator; when the current enabling attributes both are active and the expected enabling attributes both are active, maintaining a state of an active operation indicator, and setting a standby operation indicator as standby; when the current enabling attributes both are standby and the expected enabling attributes both are active, maintaining a state of the standby operation indicator, and setting the active operation indicator as active; when the expected enabling attributes are one active and one standby, regardless of the current enabling attributes, setting or maintaining the state of the active-standby operation indicator as the expected enabling attributes; and when the expected enabling attribute both are standby, regardless of the current enabling attributes, setting or maintaining the state of the active operation indicator as active, and setting or maintaining the standby operation indicator as standby.

The following Table 1 is a list of rules for whether to perform a switching operation on the active-standby operation indicator according to the expected enabled states as provided by a specific embodiment of the present disclosure.

**Table 1**

| Serial | Expected enabled state of the active operation indicator | Expected enabled state of the standby operation indicator | Current enabled state of the active operation indicator | Current enabled state of the standby operation indicator | Switch processing of the active-standby operation indicator |
|---|---|---|---|---|---|
| 1 | Active | Active | Active | Standby | Maintaining a state of the active-standby operation indicator, that is, no switch processing is performed on the active-standby operation indicator |
| 2 | Active | Active | Standby | Active | Maintaining a state of the active-standby operation indicator, that is, no switch processing is performed on the active-standby operation indicator |
| 3 | Active | Active | Active | Active | Maintaining a state of an active operation indicator, and setting a standby operation indicator as standby |
| 4 | Active | Active | Standby | Standby | Maintaining a state of the standby operation indicator, and setting the active operation indicator as active |
| 5 | Active | Standby | Taking no account | Taking no account | Setting or maintaining the state of the active-standby operation indicator as consistent with the expected enabling attributes |
| 6 | Standby | Active | Taking no account | Taking no account | |
| 7 | Standby | Standby | Taking no account | Taking no account | setting or maintaining the active operation indicator as active, and setting or maintaining the standby operation indicator as standby (if it is being consistent with the current enabling attributes, no switch processing is performed on the active-standby operation indicator, otherwise the switch processing is to be performed) |

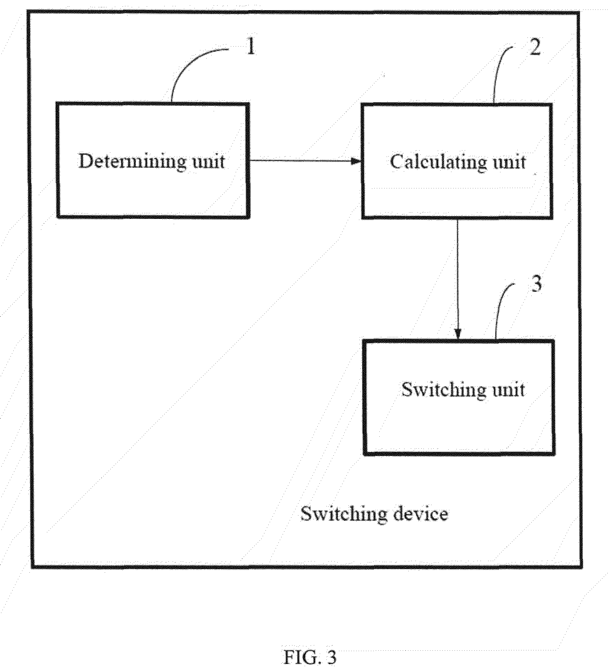

FIG. 3 is a schematic structural diagram of a first embodiment of an active-standby switching device for an operation indicator according to a specific implementation of the present disclosure, as shown in FIG.3, current enabling attributes of an active-standby operation indicator are determined according to feature states of external interfaces of the active-standby operation indicator, thereafter expected enabling attributes of the active-standby operation indicator are calculated accordingly, and finally, the active-standby operation indicator is switched according to the current enabling attributes and the expected enabling attributes.

In the specific implementation shown in this figure, the active-standby switching device for an operation indicator comprises a determining unit 1, a calculating unit 2, and a switching unit 3. The determining unit 1 is configured to determine current enabling attributes of an active-standby operation indicator according to feature states of all external interfaces of the active-standby operation indicator; the calculating unit 2 is configured to calculate expected enabling attributes of the active-standby operation indicator according to priorities and based on configuration rules; and the switching unit 3 is configured to switch the active-standby operation indicator according to the current enabling attributes and the expected enabling attributes.

Referring to FIG. 3, the interfaces in respective levels of the operation indicator will affect which one of the two operation indicators is the active operation indicator and which one of the two operation indicators is the standby operation indicator in a next time period, the influence factors of the interfaces in respective levels have been properly considered and dealt with, so that switching of the active-standby operation indicator can adapt to the complex multi-interface, multi-priority application scenarios.

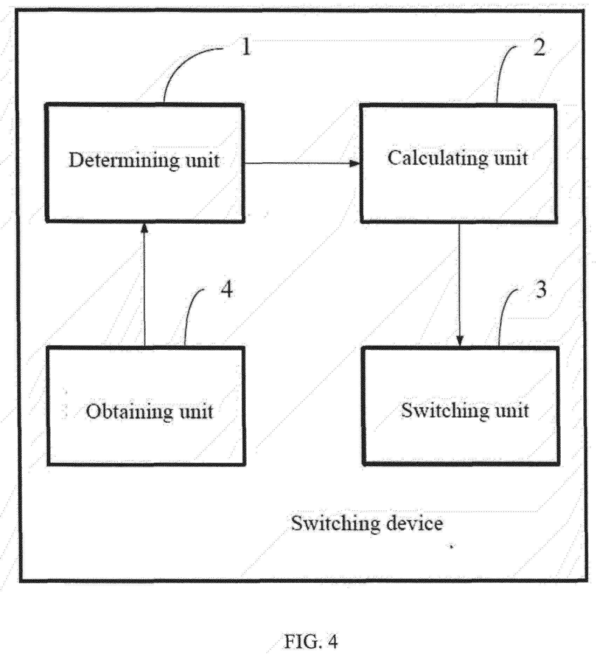

FIG. 4 is a schematic structural diagram of a second embodiment of an active-standby switching device for an operation indicator according to a specific implementation of the present disclosure. As shown in FIG. 4, the feature states of the external interfaces of the active-standby operation indicator need to be obtained first.

In the specific implementation shown in this figure, the active-standby switching device for an operation indicator further comprises an obtaining unit 4. The obtaining unit 4 is configured to obtain the feature states of the external interfaces of the active-standby operation indicator.

Referring to FIG. 4, the feature states of the external interfaces are taken into consideration when switching the active-standby operation indicator, so that switching of the active-standby operation indicator can adapt to the complex multi-interface, multi-priority application scenarios.

A specific implementation of the present disclosure further provides a computer storage medium containing computer-executable instructions, wherein when the computer-executable instructions are processed by a data processing device, the data processing device executes the following steps:
Step 101: determining current enabling attributes of an active-standby operation indicator according to feature states of all external interfaces of the active-standby operation indicator;
Step 102: calculating expected enabling attributes of the active-standby operation indicator according to priorities and based on configuration rules; and
Step 103: switching the active-standby operation indicator according to the current enabling attributes and the expected enabling attributes.

A specific implementation of the present disclosure further provides a computer storage medium containing computer-executable instructions, wherein when the computer-executable instructions are processed by a data processing device, the data processing device executes the following steps:
Step 100: obtaining the feature states of the external interfaces of the active-standby operation indicator;
Step 101: determining current enabling attributes of an active-standby operation indicator according to feature states of all external interfaces of the active-standby operation indicator;
Step 102: calculating expected enabling attributes of the active-standby operation indicator according to priorities and based on configuration rules; and
Step 103: switching the active-standby operation indicator according to the current enabling attributes and the expected enabling attributes.

A specific implementation of the present disclosure further provides a computer storage medium containing computer-executable instructions, wherein when the computer-executable instructions are processed by a data processing device, the data processing device executes the following steps:
when the current enabling attributes are one active and one standby and the expected enabling attributes both are active, maintaining a state of the active-standby operation indicator;
when the current enabling attributes both are active and the expected enabling attributes both are active, maintaining a state of an active operation indicator, and setting a standby operation indicator as standby;
when the current enabling attributes both are standby and the expected enabling attributes both are active, maintaining a state of the standby operation indicator, and setting the active operation indicator as active;
when the expected enabling attributes are one active and one standby, regardless of the current enabling attributes, setting or maintaining the state of the active-standby operation indicator as the expected enabling attributes; and
when the expected enabling attribute both are standby, regardless of the current enabling attributes, setting or maintaining the active operation indicator as active, and setting or maintaining the standby operation indicator as standby.

The following Table 2 is a list of factors with which the external interfaces of the operation indicator affect switching of the active-standby operation indicator.

**Table 2**

| A list of factors that affect switching of the active-standby operation indicator (priories of external interfaces are: an upper layer has a higher priority, a lower layer has a lower priority, sequence may be configured) | | |
|---|---|---|
| Serial | Interface | Factor descriptions |
| 1 | Interlock interface | A channel connection state, a channel active-standby state of the operation indicator and the interlock dual-system |
| 2 | Train control interface | A channel connection state, a channel active-standby state of the operation indicator and the train control dual-system, whether having control right |
| 3 | CTC interface | A channel connection state, a channel active-standby state of the operation indicator and the CTC dual-system, whether having control right |
| 4 | Second CTC interface | A channel connection state, a channel active-standby state of the operation indicator and the second CTC dual-system, whether having control right |
| 5 | Console interface | A channel connection state, a channel active-standby state of the operation indicator and the console, whether having control right |
| 6 | Remote operation indicator | A dual-channel connection state, a channel active-standby state of the operation indicator and the remote operation indicator, whether having control right |

The following Table 3 is category of results caused by that external interfaces affect switching of the active-standby operation indicator.

**Table 3**

| Category of results caused by that external interfaces affect switching of the active-standby operation indicator (influence results are deduced according to influence factors of each interface) | | |
|---|---|---|
| Serial | Influence result | Meaning descriptions |
| 1 | Must Active | It must be an active operation indicator, there is no need to take into account the other interface system factors, the processing logic directly ends. |
| 2 | Must Standby | It must be a standby operation indicator, there is no need to take into account the other interface system factors, the processing logic directly ends. |
| 3 | Active Next | It is an active operation indicator, other interface system factors of a lower layer may be further considered. At this time, it actively lowers its own decision-making power, leaving a lower-layer system in charge. |
| 4 | Standby Next | It is a standby operation indicator, other interface system factors of a lower layer may be further considered. At this time, it actively lowers its own decision-making power, leaving a lower-layer system in charge. |
| 5 | Inherited Next | Providing no recommendation, inheriting an influence result from an upper layer, and continuing to leave a lower-layer system in charge. |

The following Table 4 is logic explanation for switch processing of the active-standby operation indicator.

**Table 4**

| Switching logic of the active-standby operation indicator | |
|---|---|
| Serial | Logic explanation |
| 1 | Configuration of the reading rules: |
| | Types and priority order of external interface systems that affect switching of the dual-processor operation indicator are determined by configuration. |
| | Influence factors of each interface system and influence results to which a combination of the influence factors corresponds are determined by configuration. |
| | A list of rules for interface influence factors: each rule is composed by one set of conditions and a corresponding result. |
| 2 | Obtaining states of the factors: |
| | Periodically obtaining states of all influence factors of a host operation indicator and all the other interface systems (an interface channel connection state of respective interfaces, an active-standby state, and an operation mode state). |
| | Periodically obtaining states of all influence factors of a counterpart operation indicator and all the other interface systems. |
| | The influence factors are distilled into: whether the host operation indicator is available, whether the counterpart operation indicator is available, whether an interface system has control rights. |
| 3 | Generating a recommendation for the active-standby operation indicator: According to priorities of the interface systems, a rule set of each interface system is processed stage by stage from top to bottom, each interface system has one rule set, a result to which the rule that meets the conditions corresponds is the final influence result. |
| 4 | A finally obtained state of the active operation indicator or the standby operation indicator is compared with the current state of the active operation indicator or the standby operation indicator, whether to perform a switching operation on the active-standby operation indicator is determined according to the processing rules. |

Table 5 shows interlocking system rules, numerical values of conditions in the table include 0 and 1 (0 means unavailable, 1 means available); the influence result includes: Must Active, Must Standby, Active Next, Standby Next, and Inherited Next. When the active-standby operation indicator is switched, interface control authority is not considered.

**Table 5**

| **Serial** | **Host operation indicator** | **Other operation indicator** | **Control authority of interface system** | **Influence result of host operation indicator** |
|---|---|---|---|---|
| 1 | 1 | 1 | Taking no account | Active Next |
| 2 | 1 | 0 | Taking no account | Must Active |
| 3 | 0 | 1 | Taking no account | Must Standby |
| 4 | 0 | 0 | Taking no account | Must Standby |

Table 6 shows train control system rules, numerical values of conditions in the table include 0 and 1 (0 means unavailable, 1 means available); the influence result includes: Must Active, Must Standby, Active Next, Standby Next, and Inherited Next. When the active-standby operation indicator is switched, interface control authority is not considered.

**Table 6**

| Serial | **Host operation indicator** | **Other operation indicator** | **Control authority of interface system** | **Influence result of host operation indicator** |
|---|---|---|---|---|
| 1 | 1 | 1 | Taking no account | Inherited Next |
| 2 | 1 | 0 | Taking no account | Active Next |
| 3 | 0 | 1 | Taking no account | Standby Next |
| 4 | 0 | 0 | Taking no account | Inherited Next |

Table 7 shows CTC system rues, numerical values of conditions in the table include 0 and 1 (0 means unavailable, 1 means available); the influence result includes: Must Active, Must Standby, Active Next, Standby Next, and Inherited Next. When the active-standby operation indicator is switched, interface control authority is not considered.

**Table 7**

| **Serial** | **Host operation indicator** | **Other operation indicator** | **Control authority of interface system** | **Influence result of host operation indicator** |
|---|---|---|---|---|
| 1 | 1 | 1 | Taking no account | Inherited Next |
| 2 | 1 | 0 | Control | Must Active |
| 3 | 1 | 0 | Not Control | Active Next |
| 4 | 0 | 1 | Control | Must Standby |
| 5 | 0 | 1 | Not control | Standby Next |
| 6 | 0 | 0 | Taking no account | Inherited Next |

Table 8 shows CTC system rules, numerical values of conditions in the table include 0 and 1 (0 means unavailable, 1 means available); the influence result includes: Must Active, Must Standby, Active Next, Standby Next, and Inherited Next. When the active-standby operation indicator is switched, interface control authority is not considered.

**Table 8**

| **Serial** | **Host operation indicator** | **Other operation indicator** | **Control authority of interface system** | **Influence result of host operation indicator** |
|---|---|---|---|---|
| 1 | 1 | 1 | Taking no account | Inherited Next |
| 2 | 1 | 0 | Control | Active |
| 3 | 1 | 0 | Not control | Active Next |
| 4 | 0 | 1 | Control | Standby |
| 5 | 0 | 1 | Not control | Standby Next |
| 6 | 0 | 0 | Taking no account | Inherited Next |

To sum up, when the calculation reaches the lowest-level interface system, if the final influence result still contains Next, it means that the influence factors of none of the interface systems are necessary. At this time, the expected value with the highest priority is used as a final prepared value.

Specific embodiments of the present disclosure provide an active-standby switching method and device for an operation indicator, and a computer storage medium, wherein feature states of all external interface systems of the operation indicator are obtained, current enabling attributes of the operation indicator and the external interface systems are determined according to the feature states of the external interface systems, expected enabling attributes of the operation indicator and the external interface systems are calculated according to priories and based on configuration rules, the current enabling attributes and the expected enabling attributes are compared to switch the active-standby operation indicator. The external interfaces are hierarchically processed according to priorities, mutual interference is avoided, and the external interfaces can be easily extended; a list of rules for priories of the external interfaces and influence factors of the external interfaces can be configured to facilitate modifying the switch processing logic; influence results caused by the external interfaces on switching of the active-standby operation indicator are divided into categories such as Must, Inherited from a higher level, Recommending and listening to a lower level, so that the influence factors of interfaces in respective levels have been properly considered and dealt with, thereby switching of the active-standby operation indicator can adapt to the complex multi-interface, multi-priority application scenarios.

The above-described embodiments of the present disclosure may be implemented in various hardware, software codes, or a combination thereof. For example, the embodiments of the present disclosure may also be program codes for executing the above method in a Digital Signal Processor (DSP). The present disclosure may also relate to a variety of function performed by a computer processor, a digital signal processor, a microprocessor, or a Field Programmable Gate Array (FPGA). The above-mentioned processor may be configured to perform specific tasks in accordance with the present disclosure, which is implemented by executing machine-readable software codes or firmware codes that define a particular method disclosed by the present disclosure. Software codes or firmware codes may be developed into different programming languages and different formats or forms. Software codes may also be complied for different target platforms. However, different code patterns, types, and languages of software codes and other types of configuration code that perform tasks in accordance with the present disclosure do not depart from the spirits and scopes of the present disclosure.

The foregoing descriptions are merely exemplary specific implementations of the present disclosure. Any changes and modifications made by those skilled in the art without departing from the concepts and principles of the present disclosure shall fall within the protection scopes of the present disclosure.

## Claims

1. An active-standby switching method for an operation indicator, said method comprising:
determining current enabling attributes of an active-standby operation indicator according to feature states of all external interfaces of the active-standby operation indicator;
calculating expected enabling attributes of the active-standby operation indicator according to priorities and based on configuration rules; and
switching the active-standby operation indicator according to the current enabling attributes and the expected enabling attributes.

2. The active-standby switching method for an operation indicator according to claim 1, said method further comprising:
obtaining the feature states of the external interfaces of the active-standby operation indicator.

3. The active-standby switching method for an operation indicator according to claim 2, wherein the feature states include an interface channel connection state, an active-standby state, and an operation mode state.

4. The active-standby switching method for an operation indicator according to any one of claims 1 to 3, wherein the current enabling attributes specifically include an active-standby state of the active-standby operation indicator.

5. The active-standby switching method for an operation indicator according to any one of claims 1 to 4, wherein the expected enabling attributes specifically include an active-standby state of the active-standby operation indicator,

6. The active-standby switching method for an operation indicator according to any one of claims 1 to 5, wherein the step of switching the active-standby operation indicator according to the current enabling attributes and the expected enabling attributes specifically comprises:
when the current enabling attributes are one active and one standby and the expected enabling attributes both are active, maintaining a state of the active-standby operation indicator;
when the current enabling attributes both are active and the expected enabling attributes both are active, maintaining a state of an active operation indicator, and setting a standby operation indicator as standby;
when the current enabling attributes both are standby and the expected enabling attributes both are active, maintaining a state of the standby operation indicator, and setting the active operation indicator as active;
when the expected enabling attributes are one active and one standby, regardless of the current enabling attributes, setting or maintaining the state of the active-standby operation indicator as the expected enabling attributes; and
when the expected enabling attribute both are standby, regardless of the current enabling attributes, setting or maintaining the state of the active operation indicator as active, and setting or maintaining the standby operation indicator as standby.

7. The active-standby switching method for an operation indicator according to any one of claims 1 to 6, wherein the configuration rules specifically include: an interlock system rule, a train control system rule, a CTC system rule, and a console system rule.

8. The active-standby switching method for an operation indicator according to any one of claims 1 to 7, wherein an order of the priorities from high to low is: an interlock interface, a train control interface, a CTC interface, and a console interface.

9. An active-standby switching device for an operation indicator, said device comprising:
a determining unit configured to determine current enabling attributes of an active-standby operation indicator according to feature states of all external interfaces of the active-standby operation indicator;
a calculating unit configured to calculate expected enabling attributes of the active-standby operation indicator according to priorities and based on configuration rules;
and
a switching unit configured to switch the active-standby operation indicator according to the current enabling attributes and the expected enabling attributes.

10. The active-standby switching device for an operation indicator according to claim 9, said device further comprising:
an obtaining unit configured to obtain the feature states of the external interfaces of the active-standby operation indicator.

11. A computer storage medium containing computer-executable instructions capable of, when being processed by a data processing device, causing the data processing device to perform the method according to any one of claims 1 to 7.
